# EUROPÄISCHE PATENTSCHRIFT

(11) **EP 0 784 123 B1**
(45) Veröffentlichungstag und Bekanntmachung des Hinweises auf die Patenterteilung: **05.04.2000**
(21) Anmeldenummer: 97100402.3
(22) Anmeldetag: 13.01.1997
(51) Int. Cl.: E01F 8/00

(54) **Integrierte Photovoltaik Lärmschutzbauwerke**
Noise protection assembly with integral photovoltaic system
Assemblage anti-bruit avec système photovoltaique intégré

(30) Priorität: 13.01.1996 DE 19601095
(43) Veröffentlichungstag der Anmeldung: 16.07.1997
(73) Patentinhaber: Ed. Züblin Aktiengesellschaft, D-70567 Stuttgart (DE)
(72) Erfinder: Steinle, Alfred, Dr., 70469 Stuttgart (DE)

(56) Entgegenhaltungen:
- EP-A- 0 548 856
- EP-A- 0 567 040
- DE-A- 3 940 023
- DE-A- 4 442 298
- DE-A- 19 528 211
- PATENT ABSTRACTS OF JAPAN vol. 95, no. 6, 31.Juli 1995 & JP 07 071008 A (SEKISUI JUSHI), 14.März 1995,
- BETON UND STAHLBETONBAU., Bd. 81, Nr. 10, BERLIN, Seite a25 XP002030227 "Leichtbau-Lärmschutztunnel Stuttgart."
- PATENT ABSTRACTS OF JAPAN vol. 18, no. 323 (M-1624), 20.Juni 1994 & JP 06 073712 A (KOGA SHOSUKE), 15.März 1994,

## Beschreibung

Photovoltaische Stromerzeugung stellt eine umwelttechnisch überzeugende Art der Stromerzeugung dar. Leider gibt es viele Nachteile einer Stromproduktion mit Solarmodulen. Zunächst sind da die hohen Kosten von Solarelementen zu nennen, zum weiteren ist der Flächenverbrauch für die Installation von Solarmodulen und deren Kopplung zu technisch vernünftigen Anlagengrößen sehr groß. Daher sucht man nach Möglichkeiten, die Solaranlagen an bestehenden Bauten zu installieren oder sie von vornherein bei einer neuen Erstellung von Bauwerken einzuplanen. Eine Möglichkeit der Installation von Solaranlagen besteht bei der Erstellung von Lärmschutzwänden entlang von Straßen oder Bahnanlagen.

Bekannt ist aus der DE-A-44 42 298 eine Vorrichtung, mit der Solarmodule an einer Wand, also auch einer Schallschutzwand befestigt werden können.

Auch die DE-A-39 40 023 befaßt sich mit einem System, mit dem die Solarzelle auf einem Arm gelagert werden kann. Die DE-A-40 26 165 beschreibt eine Lärmschutzwand, bei der die gesamte Wandfläche als Solarzelle ausgebildet ist. Bei allen diesen bekannten Systemen gibt es stets den Nachteil, daß die Oberflächen der Solarmodule stark reflektierend sind und keine schallschluckenden Eigenschaften aufweisen.

In der DE-A-195 28 211 wird daher eine Lärmschutzwand angegeben, bei der die photovoltaischen Elemente auf der schallabgewandten Seite der Lärmschutzwand angebracht sind.

In der EP-A-0 548 856 wird eine Lärmschutzwand aus Betonfertigteilen mit hohem Schallabsorbtionsgrad an der schallzugewandten Seite, aber ohne photovoltaische Elemente beschrieben.

Die Aufgabe, die sich aus dem bekannten Stand der Technik stellt, ist es, ein Lärmschutzbauwerk mit hoher schallabsorbierender Wirkung zu erstellen, und gleichzeitig eine mühelose Installation von Solarmodulen zu ermöglichen. Unsere Erfindung schlägt vor, Lärmschutzbauten aus Beton einzusetzen, deren dem Schallerzeuger zugewandte Fläche einen hohen Absorptionsgrad aufweist. Diese hochabsorbierende Fläche wird ergänzt von Solarmodulen, die nach einer bevorzugten Ausführungsform in einem Winkel von ca. 30 ° in speziellen Befestigungen installiert werden. Diese Kombination eines hochabsorbierenden Schallschutzelementes, wie sie aus der DE-U-8902956 bekannt ist, mit Solarmodulen hat den Vorteil, daß man einen hohen Schallschluckgrad erreicht, während es dennoch möglich ist, die Sonnenenergie zu nutzen.

Die abhängigen Ansprüche stellen vorteilhafte Weiterbildungen des Lärmschutzbauwerks gemäß Anspruch 1 dar.

Ein Ausführungsbeispiel für eine Lärmschutzwand wird in den Fig. 1 bis 5 beschrieben.
- Fig. 1: Seitliche Ansicht eines Lärmschutzbauwerks
- Fig. 2: Straßenansicht des Lärmschutzbauwerks
- Fig. 3: Verfahren zur Herstellung dem Lärmschutzbauwerks
- Fig. 4: Befestigung und Anschluß der Solarmodule auf dem Lärmschutzbauwerk
- Fig. 5: Detail der Befestigung der Solarmodule an dem Lärmschutzbauwerk, Schnitt B-B aus Fig. 3

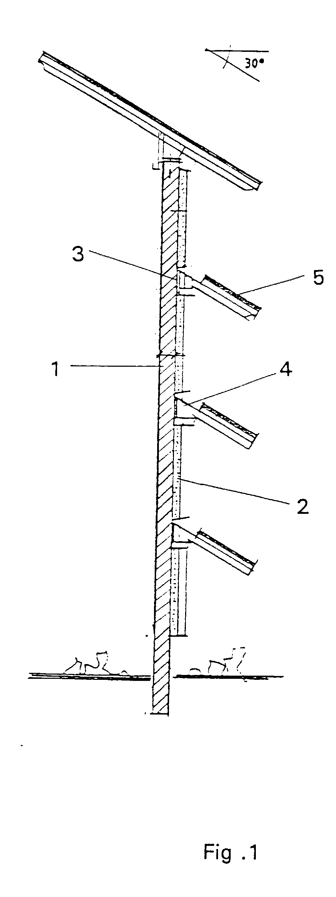

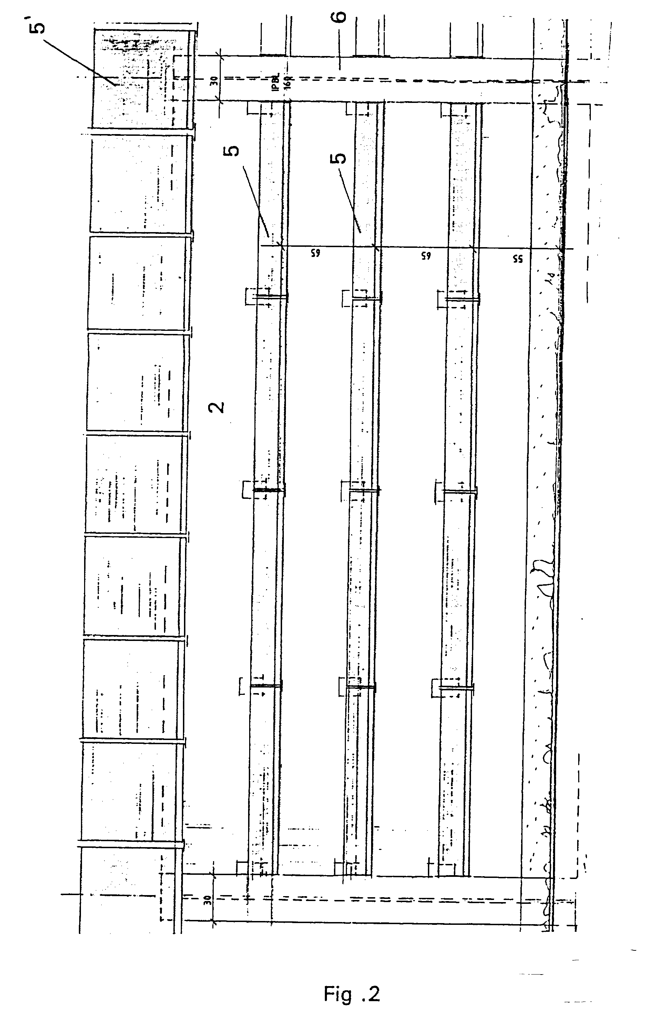

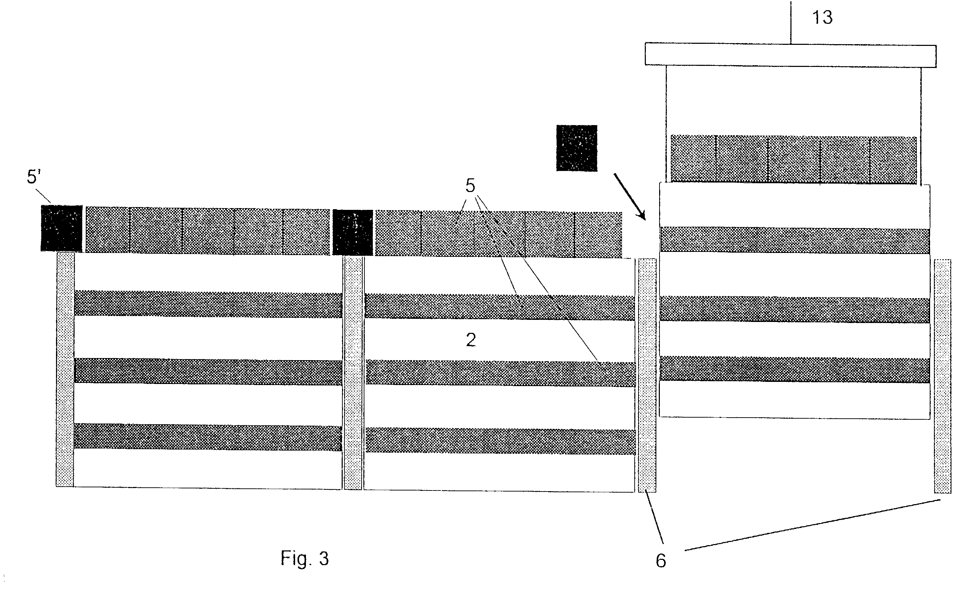

Fig. 1 zeigt im Querschnitt eine erfindungsgemäße Lärmschutzwand. Das Lärmschutzbauwerk, das die Form einer Lärmschutzwand hat, besteht aus einer Tragschale aus Beton 1 und einer strukturierten Vorsatzschale 2 aus haufwerksporigem Einkombeton oder Porenbeton, der besonders gute Schallabsorptionseigenschaften aufweist. Die Vorsatzschale kann, um einen größtmögliche Oberfläche zu bekommen, gerippt oder gewellt ausgebildet sein. Die Vorsatzschale für eine Lärmschutzwand wird bei der Herstellung des Fertigteils gleich auf der Tragschale aufgebracht. Die Vorsatzschale weist Aussparungen 3 auf, die zur Aufnahme der Befestigungen 4 der Solarmodule 5 dienen. Die Solarmodule werden im Winkel von 30° angebracht. Den oberen Abschluß der Lärmschutzwand bildet ein größer dimensioniertes Solarmodul, so daß eine Erhöhung der Lärmschutzwand stattfindet und eine höhere Wirksamkeit des Bauelements durch Abstrahlung der Schalls nach oben eintritt. In Fig. 2 erkennt man die Front einer mit Solarmodulen 5 bestückten Lärmschutzwand. Fig. 3 zeigt das Verfahren zur Herstellung einer Lärmschutzwand aus vorgefertigten Bauteilen. Das Betonfertigteil 1 wird von einem Kran 13 in vorbereitete Pfosten 6 eingeschoben oder nach der Positionierung von vorne befestigt. Das Band der schmalen Solarmodule, die bereits im Werk installiert werden, geht über die gesamte Breite des Fertigteils. Das Band der breiteren Abschlußzellen wird bei der Installation zunächst durch Lücken an den Pfosten 6 unterbrochen, die nach dem Einbringen des Fertigteils durch die Solarmodule 5' geschlossen werden.

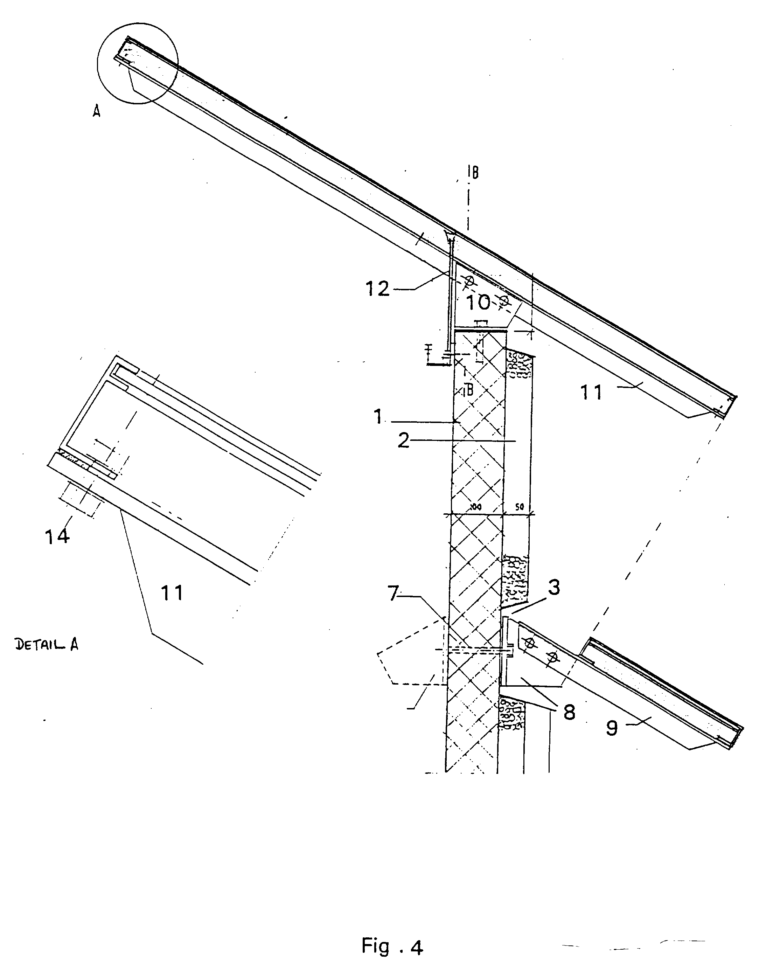

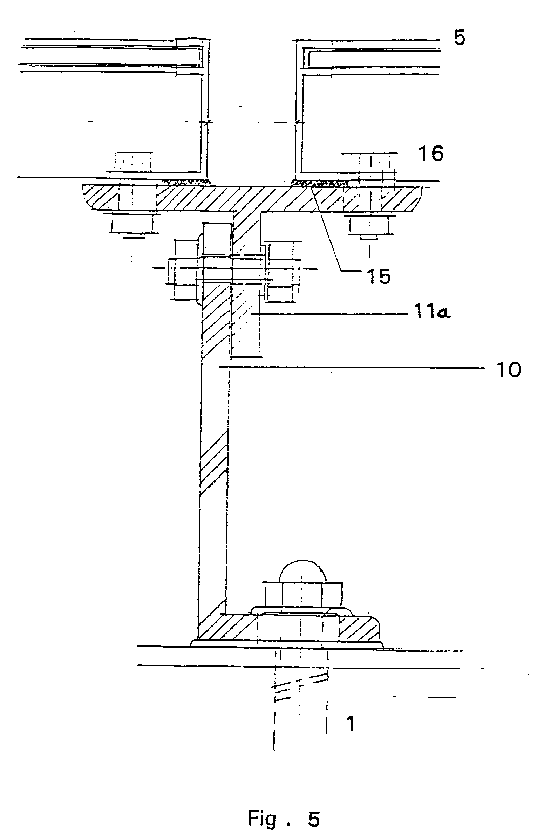

Fig. 4 zeigt die Befestigung der Solarmodule an dem Betonfertigteil. In der Aussparung 3 der Vorsatzschale wird das Gewinde für den Befestigungskragarm vorgesehen. Mit einer Schraube 7 wird das Winkelblech 8 befestigt. Das Winkelblech 8 greift in den Kragarm 9 und arretiert das Solarmodul, das dem Kragarm verschraubt wird. Die Befestigungen befinden sich jeweils am Stoß zweier Module. Das aufgesetzte Solarmodul 5 sitzt ebenfalls auf einem Winkelblech 10, das mit dem Kragarm 11 verbunden ist. Damit der Effekt der Erhöhung des Beugungspunktes des Schalls erreicht wird, muß die Befestigung schalldicht gemacht werden. Dazu dient ein Alublech 12, das mit einer Profildichtung versehen ist. Die untere Kante des Alubleches wurde umgekantet, so daß ein Kabelkanal entsteht. Im Detail A der oberen Kante der Solarzelle erkennt man die Befestigung des Solarmoduls auf dem Kragarm 11 mit einer Schraube 14. Das Solarmodul liegt wiederum auf dem Kragarm 11 auf. Fig. 5 ist ein Schnitt B-B durch die Befestigung des Abschlußsolarmoduls. Das Winkelprofil 10 ist mit der Tragschale der Lärmschutzwand verschraubt und trägt ein T-Profil 11a. Auf diesem T-Profil sitzen die Solarmodule 5 auf einem Compriband 15 auf und werden über Schrauben 16 gehalten. Diese einfache Konstruktion für die Halterung von Solarmodulbänder macht es einerseits möglich die Module schon bei der Herstellung des Fertigteils im Werk selbst fertig zu installieren, als auch einen nachträglichen Einbau vorzunehmen. Die Befestigung ermöglicht einen einfachen Austausch beschädigter Module.

Mit der erfindungsgemäßen Befestigung an der hochabsorbierenden Lärmschutzwand lassen sich sogar nachträgliche Ausstattungen von schon bestehenden Lärmschutzwänden realisieren. Dazu muß gegebenenfalls das Winkelblech an die Oberfläche der Lärmschutzwand angepaßt werden, wenn in der bestehenden Wand keine Aussparungen in der Vorsatzschale vorgesehen sind. Die restliche Befestigung kann aber identisch übernommen werden.

### Legende

- 1: Tragschale
- 2: Vorsatzschale
- 3: Aussparungen
- 4: Befestigung
- 5: Solarmodul
- 6: Pfosten
- 7: Schraube
- 8: Winkelblech
- 9: Kragarm
- 10: Winkelblech
- 11: Kragarm
- 11a: T-Profil
- 12: Alublech
- 13: Kran
- 14: Schraube
- 15: Compriband
- 16: Schraube

## Patentansprüche

1. Lärmschutzbauwerk aus Betonfertigteilen, bestehend aus einer Betontragschale (1) und einer schallabsorbierenden Vorsatzschale (2), deren dem Schallerzeuger zugewandte Oberfläche aus Beton mit einem hohen Absorptionsgrad besteht und an denen Solarmodule (5) angebracht sind,
gekennzeichnet dadurch, daß die Solarmodule aus Reihen von photovoltaischen Elementen (5) bestehen, welche auf vorstehenden Halterungen auf der dem Lärm zugewandten Seite des Lärmschutzbauwerks befestigt sind.

2. Lärmschutzbauwerk aus Betonfertigteilen nach Anspruch 1,
gekennzeichnet dadurch, daß das Bauwerk eine Lärmschutzwand ist, deren dem Schall zugewandte Oberfläche aus haufwerksporigem Beton besteht.

3. Lärmschutzbauwerk aus Betonfertigteilen nach Anspruch 1,
gekennzeichnet dadurch, daß in der Vorsatzschale (2) Aussparungen (3) zur Befestigung der photovoltaischen Elemente (5) vorhanden sind.

4. Lärmschutzbauwerk aus Betonfertigteilen nach Anspruch 2,
gekennzeichnet dadurch, daß die Oberfläche mit schallabsorbierendem Beton strukturiert ist.

5. Lärmschutzbauwerk aus Betonfertigteilen nach Anspruch 1 bis 4,
gekennzeichnet dadurch, daß die Halterung der photovoltaischen Elemente (5) direkt an der Betontragschale (1) erfolgt.

6. Lärmschutzbauwerk aus Betonfertigteilen nach Anspruch 4,
gekennzeichnet dadurch, daß die Halterung aus einem Metallprofil (8) und einem Kragarm (9) besteht, auf die das photovoltaische Element (5) aufgelegt und befestigt wird.

7. Lärmschutzbauwerk aus Betonfertigteilen nach Anspruch 1 bis 6,
gekennzeichnet dadurch, daß als oberer Abschluß eine Reihe von photovoltaischen Elementen (5) angebracht wird und daß eine Blechverkleidung den Schalldurchgang durch die Lücke zwischen Fertigteil und photovoltaischem Element (5) verhindert.

## Claims

1. Noise protection assembly made of precast concrete elements, comprising a load-bearing concrete layer (1) and a sound-absorbing facing layer (2) whose surface in the direction of the sound emitter consists of concrete with high absorptivity, and solar modules (5) that are fixed thereto, characterized in that the solar modules consist of a series of photovoltaic elements (5) which are mounted on the projecting holders on the precast element side facing the direction of the noise.

2. Noise protection assembly made of precast concrete elements according to claim 1, characterized in that the assembly is a noise protection wall whose surface facing the direction of the noise consists of popcorn concrete.

3. Noise protection assembly made of precast concrete elements according to claim 1, characterized in that the facing layer (2) contains recesses (3) for mounting the photovoltaic elements (5).

4. Noise protection assembly made of precast concrete elements according to claim 2, characterized in that the surface with the sound-absorbing concrete is textured.

5. Noise protection assembly made of precast concrete elements according to claims 1 to 4, characterized in that the holder of the photovoltaic elements (5) is installed directly on the load-bearing concrete layer (1).

6. Noise protection assembly made of precast concrete elements according to claim 4, characterized in that the holder consists of a metal section (8) and a cantilevered arm (9) onto which the photovoltaic element (5) is placed and mounted.

7. Noise protection assembly made of precast concrete elements according to claims 1 to 6, characterized in that a series of photovoltaic elements (5) is fixed as a capping and that sheet metal cladding prevents the passage of sound through the gap between the precast concrete element and the photovoltaic element (5).

## Revendications

1. Assemblage anti-bruit de pièces préfabriquées en béton comprenant une coque porteuse en béton (1) et une coque additionnelle d'absorption acoustique (2), dont la surface tournée vers le générateur acoustique est composée de béton ayant un haut degré d'absorption, et sur lesquelles des modules solaires (5) sont apposés,
caractérisé en ce que les modules solaires se composent de rangées d'éléments photovoltaïques (5) fixés sur des supports en saillie sur le côté de la pièce préfabriquée tournée vers le bruit.

2. Assemblage anti-bruit de pièces préfabriquées en béton selon la revendication 1, caractérisé en ce que la construction est une paroi anti-bruit dont la surface tournée vers le son est composée de béton à texture caverneuse.

3. Assemblage anti-bruit de pièces préfabriquées en béton selon la revendication 1, caractérisé en ce que des évidements (3) existent dans la coque additionnelle (2) pour la fixation des éléments photovoltaïques (5).

4. Assemblage anti-bruit de pièces préfabriquées en béton selon la revendication 2, caractérisé en ce que la surface avec le béton à absorption acoustique est structurée.

5. Assemblage anti-bruit de pièces préfabriquées en béton selon les revendications 1 à 4, caractérisé en ce que la fixation des éléments photovoltaïques (5) intervient directement sur la coque porteuse en béton (1).

6. Assemblage anti-bruit de pièces préfabriquées en béton selon la revendication 4, caractérisé en ce que la fixation se compose d'un profilé de métal (8) et d'un bras en porte-à-faux (9) sur lequel l'élément photovoltaïque est posé et fixé.

7. Assemblage anti-bruit de pièces préfabriquées en béton selon les revendications 1 à 6, caractérisé en ce qu'une série d'éléments photovoltaïques (5) est apposée comme bordure supérieure et qu'un blindage en tôles empêche le passage du son par l'interstice entre la pièce préfabriquée et l'élément photovoltaïque (5).
